# FASCICULE DE BREVET EUROPEEN

(11) **EP 0 879 499 B1**
(45) Date de publication et mention de la délivrance du brevet: **27.08.2003**
(21) Numéro de dépôt: 97901138.4
(22) Date de dépôt: 22.01.1997
(51) Int. Cl.: H02P 7/05

(54) **PROCEDE POUR ALIMENTER UN MOTEUR ELECTRIQUE A RELUCTANCE VARIABLE A COMMUTATION ELECTRONIQUE ET CIRCUIT D'ALIMENTATION POUR SA MISE EN OEUVRE**
VERFAHREN ZUM BEARBEITEN EINES ELEKTRONISCH KOMMUTIERTEN, VARIABLEN RELUKTANZMOTORS UND STROMVERSORGUNGS-SCHALKREIS DAFÜR
METHOD FOR POWERING AN ELECTRONICALLY SWITCHED VARIABLE-RELUCTANCE ELECTRIC MOTOR, AND POWER SUPPLY CIRCUIT THEREFOR

(30) Priorité: 06.02.1996 FR 9601385
(43) Date de publication de la demande: 25.11.1998
(73) Titulaire: SEB S.A., 69130 Ecully (FR)
(72) Inventeur: GUINET, Michel, F-14610 Cambes-en-Plaines (FR)
(74) Mandataire: Kiehl, Hubert
(86) Numéro de dépôt international: FR9700120
(87) Numéro de publication internationale: WO97029542

(56) Documents cités:
- DE-C- 4 239 668
- APEC'94, vol. 1, 13 - 17 Février 1994, ORLANDO, pages 48-55, XP000467299 P.C. KJAER ET AL: "A New Energy Optimizing Control Strategy for Switched Reluctance Motors"
- PESC'94, 20 - 24 Juin 1994, TAIPEI TAIWAN, pages 937-942, XP000510313 GEUN-HIE RIM ET AL: "A Novel Converter Topology for Switched Reluctance Motor Drives Improving Efficiency and Simplifying Control Strategy"

## Description

La présente invention concerne un procédé pour alimenter un moteur électrique à réluctance variable à commutation électronique. Elle vise également un circuit d'alimentation mettant en oeuvre ce procédé.

L'alimentation en courant unidirectionnel d'un moteur à réluctance variable à commutation électronique à partir du réseau secteur monophasé met en oeuvre généralement un étage redresseur et un étage convertisseur comprenant des moyens de commutation électronique pilotés à partir de consignes et d'informations de position issues de capteurs, pour alimenter les différentes phases de ce moteur. La présente invention concerne plus particulièrement le cas de moteurs à réluctance variable à commutation électronique alimentés par un convertisseur comprenant des demi-ponts asymétriques.

On observe que dans les procédés actuels d'alimentation de moteur à commutation électronique, et notamment dans le procédé d'alimentation mis en oeuvre dans un convertisseur à demi-ponts asymétriques, le courant redressé délivré par l'étage redresseur subit des perturbations qui peuvent être à des fréquences multiples de la fréquence secteur. Ces perturbations peuvent conduire à un dépassement des valeurs des harmoniques de courant autorisées par la norme CEI 555-2. On résout actuellement ce problême en filtrant le courant d'alimentation ou le courant délivré par l'étage redresseur afin de le débarrasser des harmoniques de courant supérieurs à la fréquence du secteur. On insère par exemple un filtre, passif (à base de filtres L, C) ou actif (de type PFC: "Power Pactor Correction": Correction de Facteur de Puissance), entre l'étage redresseur et l'étage convertisseur. Cependant, l'adjonction d'un filtre fortement capacitif (par exemple 1 mH, 470 µF) laisse persister des problèmes d'harmoniques impairs à basse fréquence. Avec un filtre secteur faiblement capacitif (1,5 mH, 20 µF), on observe des harmoniques liés à la fréquence de commande. Par ailleurs, l'adjonction d'un filtre PFC en amont de l'étage convertisseur conduit à un surcoût significatif et prohibitif de l'électronique lorsque les puissances à commander dépassent plusieurs centaines de Watts.

Le but de l'invention est de remédier à ces inconvénients en proposant un procédé pour alimenter un moteur à réluctance variable à commutation électronique, mettant en oeuvre des séquences de magnétisation et de démagnétisation et dans lequel les énergies transférées au cours de ces séquences sont éventuellement mises à contribution pour compenser ou éliminer les perturbations sur le courant d'alimentation.

On atteint les objectifs précités avec un procédé pour alimenter un moteur électrique polyphasé à réluctance variable à commutation électronique à partir d'une source de tension redressée, comprenant pour chaque phase:
des séquences de magnétisation pendant lesquelles la tension redressée est appliquée sur ladite phase, et
des séquences de démagnétisation pendant lesquelles l'inverse de ladite tension redressée est appliqué sur ladite phase.

Suivant l'invention, ce procédé comprend en outre:
une détection de perturbations affectant le courant délivré par la source de tension redressée,
et en réponse à une telle détection, des séquences de roue libre pendant lesquelles l'énergie magnétique présentement stockée dans au moins l'une desdites phases est sensiblement maintenue dans celle(s)-ci.

On entend plus généralement par perturbation du courant toute déformation de l'onde de courant par rapport à une onde de courant de référence, cette déformation pouvant être induite par tout phénomène physique identifié ou non, d'origine interne ou externe au système d'entraînement concerné.

A la différence des procédés classiques d'alimentation mettant en oeuvre des demi-ponts asymétriques, dans lesquels on ne conditionne les transferts d'énergie entre la source et les phases qu'à des paramètres angulaires (opposition, conjonction et éventuels déphasages) et à des consignes de fonctionnement et de sécurité, dans le procédé selon l'invention, ces transferts d'énergie peuvent être retardés ou inhibés afin de compenser des perturbations détectées sur le courant d'alimentation, dans le but de respecter les normes actuelles de compatibilité électromagnétique.

Dans une forme préférée de mise en oeuvre du procédé selon l'invention, on détecte des perturbations affectant le courant d'alimentation redressé en mesurant ce courant et en le comparant à une onde de courant de référence. Mais on peut également prévoir toute forme d'estimation du courant d'alimentation redressé, ne mettant pas en oeuvre une mesure effective du courant.

Le procédé selon l'invention comprend avantageusement la détection, pendant une séquence de magnétisation d'une phase, d'un courant d'alimentation supérieur à l'amplitude de l'onde de courant de référence à l'instant de détection, cette détection conduisant à une interruption de cette séquence de magnétisation et à une séquence de roue libre sur cette phase.

Par ailleurs, la détection, pendant une séquence de démagnétisation d'une phase, d'un courant d'alimentation inférieur à l'amplitude de l'onde de courant de référence à l'instant de détection, conduit à une interruption de cette séquence de démagnétisation et à une séquence de roue libre sur cette phase.

La détection, lors de l'initiation d'une séquence de magnétisation d'une phase, d'un courant d'alimentation supérieur à l'amplitude de l'onde de courant de référence à l'instant de détection, provoque une inhibition de cette séquence de magnétisation jusqu'à ce que la perturbation sur le courant d'alimentation soit compensée.

Suivant un autre aspect de l'invention, il est proposé un circuit pour alimenter un moteur électrique polyphasé à réluctance variable à commutation électronique, comprenant des moyens pour redresser une tension alternative délivrée par une source, des moyens pour magnétiser successivement chaque phase par application de cette tension redressée sur lesdites phases, des moyens pour démagnétiser successivement chaque phase par application de l'inverse de cette tension redressée sur les phases, et des moyens pour commander lesdits moyens de magnétisation et de démagnétisation, ce circuit mettant en oeuvre le procédé selon l'invention.

Ce circuit comprend en outre des moyens pour mesurer le courant d'alimentation délivré par les moyens redresseurs, et les moyens de commande sont adaptés à détecter toute perturbation du courant d'alimentation et à commander les moyens de magnétisation et de démagnétisation de façon à corriger les perturbations du courant d'alimentation redressé.

Les moyens de commande sont avantageusement adaptés à détecter toute perturbation du courant d'alimentation par rapport à une onde de courant de référence, et les moyens de magnétisation sont commandés pour placer en roue libre la phase qui est en cours de magnétisation lorsqu'un courant d'alimentation supérieur à une valeur de référence est détecté.

Par ailleurs, les moyens de démagnétisation sont commandés pour placer en roue libre la phase qui est en cours de démagnétisation lorsqu'un courant d'alimentation inférieur à une valeur de référence est détecté.

Dans le cas d'un circuit comprenant des demi-ponts asymétriques pour alimenter chaque phase de ce moteur, chaque demi-pont asymétrique comprenant des moyens interrupteurs hauts et des moyens interrupteurs bas disposés de part et d'autre de chaque phase et des diodes de démagnétisation pour relier les bornes de chaque phase aux bornes des moyens redresseurs, les moyens de commande sont adaptés à bloquer les interrupteurs bas en réponse à une détection d'un courant d'alimentation supérieur à une valeur de référence.

Les moyens de commande sont en outre adaptés à commander en mode passant les interrupteurs hauts en réponse à une détection d'un courant d'alimentation inférieur à une valeur de référence. On peut également prévoir des moyens de filtrage interposés entre l'alimentation et les demi-ponts asymétriques.

D'autres particularités et avantages de l'invention apparaîtront encore dans la description ci-après. Aux dessins annexés donnés à titre d'exemples non limitatifs:
- la figure 1 représente un premier exemple de réalisation d'un circuit d'alimentation selon l'invention;
- la figure 2 est un ensemble de chronogrammes illustrant l'évolution des courants dans les phases et dans les interrupteurs avec un procédé classique d'alimentation mettant en oeuvre des demi-ponts asymétriques; et
- la figure 3A représente des formes d'onde des courants de phase dans le circuit d'alimentation selon l'invention représenté en figure 1;
- la figure 3B représente des chronogrammes de signaux de commande dans le circuit d'alimentation selon l'invention; et
- la figure 4 représente un second exemple de réalisation d'un circuit d'alimentation selon l'invention.

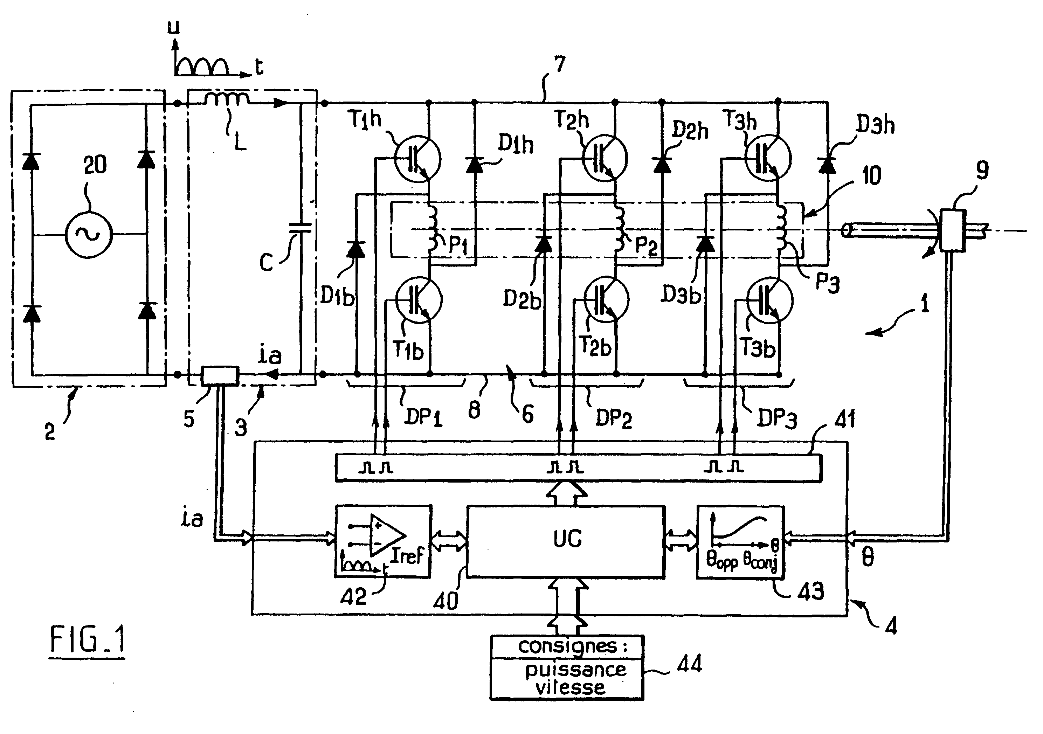

On va maintenant décrire, en référence à la figure 1, un exemple de réalisation d'un circuit d'alimentation selon l'invention. Le circuit 1 comprend un étage redresseur 2, un étage de filtrage 3, un étage convertisseur 6 couplé à trois enroulements de phase P1, P2, P3 d'un moteur à réluctance variable à commutation électronique 10. L'étage redresseur 2 possède une structure classique de pont de diodes et est prévu pour délivrer une tension u redressée double-alternance à partir d'une source de tension alternative monophasée 20. L'étage de filtrage 3 est de type passif et comprend une inductance de filtrage L en ligne et un condensateur de filtrage C en parallèle. Il est à noter que l'on peut envisager d'autres modes de filtrage que celui décrit. Par exemple, l'inductance de filtrage peut être placée en série avec la source de tension.

L'étage convertisseur 6 comprend trois demi-ponts asymétriques DP1, DP2, DP3 associés chacun à une phase P1, P2, P3 du moteur 10 et reliés tous trois en parallèle sur la sortie de l'étage de filtrage 3. Chaque demi-pont DP1-3 comprend classiquement un interrupteur haut T1h-T3h dont une borne supérieure est reliée à une ligne haute d'alimentation 7 de l'étage convertisseur 6, un interrupteur bas T1b-T3b dont une borne inférieure est reliée à une ligne basse d'alimentation 8 dudit étage convertisseur 6, une première diode de roue libre Dlh-D3h ayant sa cathode reliée à la ligne haute d'alimentation 7 et son anode reliée à la borne supérieure de l'interrupteur bas T1b-T3b, et une seconde diode de roue libre Dlb-D3b ayant sa cathode reliée à la borne inférieure de l'interrupteur haut T1h-T3h et son anode reliée à la ligne basse d'alimentation 8. Les interrupteurs de puissance hauts et bas peuvent être, à titre d'exemple non limitatif, des transistors IGBT (Insulated Gate Bipolar Transistor: transistor bipolaire à grille isolée).

Le circuit d'alimentation 1 comprend en outre un dispositif de commande 4 recevant:
- une information sur le courant d'alimentation iₐ délivré par l'étage redresseur 2, fournie par une sonde de courant 5,
- une information sur la position angulaire instantanée θ du rotor du moteur, fournie par un codeur angulaire 9 ou tout autre moyen de mesure de position angulaire, et
- des consignes de fonctionnement fournies par l'utilisateur de l'équipement intégrant ce circuit d'alimentation, notamment des consignes de puissance et de vitesse.

Le dispositif de commande 4 comprend une fonction de traitement 42 de la mesure du courant d'alimentation ia pour déterminer les perturbations éventuelles de ce courant, une fonction de traitement 43 de la mesure angulaire θ pour déterminer les instants de début des séquences de magnétisation et des séquences de démagnétisation, une fonction 44 de prise en compte des consignes de fonctionnement, une unité centrale de contrôle et de traitement 40, sous la forme par exemple d'un microcontrôleur, et une fonction 41 de génération des signaux de commande des interrupteurs hauts et bas T1h, T2h, T3h; T1b, T2b, T3b.

La fonction de traitement 42 du courant d'alimentation comprend par exemple une comparaison du courant mesuré avec une onde de courant de référence Iref sous la forme d'une onde sinusoïdale redressée double alternance. On peut également prévoir un prélèvement de la tension redressée et le traitement de cette mesure de tension pour en extraire une image de l'onde de courant de référence.

La fonction de traitement angulaire comprend par exemple une comparaison de la mesure d'angle instantané θ avec des angles caractéristiques d'un moteur à réluctance variable, notamment θopp (opposition) et θconj (conjonction). Cette fonction peut également inclure des calculs d'angle d'avance ou de retard de magnétisation et/ou de démagnétisation, en fonction notamment de la vitesse du moteur.

On va maintenant décrire le fonctionnement du procédé d'alimentation, en considérant en premier lieu les séquences essentielles des procédés classiques d'alimentation mettant en oeuvre des demi-ponts asymétriques, puis en expliquant les séquences caractéristiques de roue libre et d'inhibition mises en oeuvre dans le procédé selon l'invention.

Dans un procédé classique d'alimentation d'un moteur à réluctance variable avec des demi-ponts asymétriques, chaque transfert d'énergie vers une phase en cours de magnétisation s'accompagne nécessairement d'un appel de courant supplémentaire sur l'alimentation tandis que chaque renvoi d'énergie d'une phase en cours de démagnétisation vers l'alimentation s'accompagne nécessairement d'un apport de courant de signe opposé au courant d'alimentation. Chaque séquence de magnétisation d'une phase comprend un transfert d'énergie depuis la source et/ou depuis au moins une phase en cours de démagnétisation vers la phase en cours de magnétisation, et chaque séquence de démagnétisation comprend un transfert d'énergie depuis la phase en cours de démagnétisation vers la source de tension redressée et/ou vers au moins une phase en cours de magnétisation.

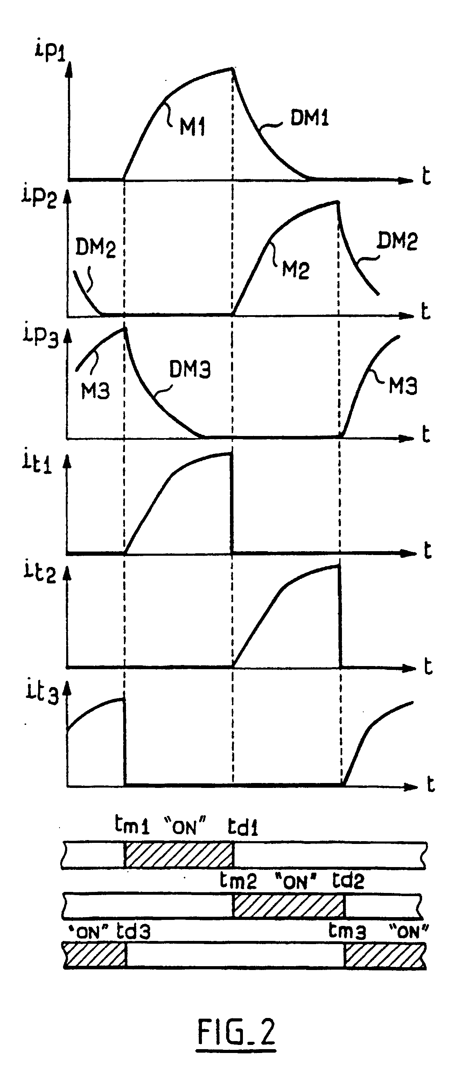

Comme l'illustre la figure 2 dans le cas d'un moteur à réluctance variable triphasé, les courants de phase iₚ₁, iₚ₂, iₚ₃ présentent des formes d'ondes comprenant, pour chaque période électrique, une partie croissante correspondant à une séquence de magnétisation M1, M2, M3, suivie d'une partie décroissante correspondant à une séquence de démagnétisation DM1, DM2, DM3. Les séquences de magnétisation sont débutées à des instants tm1, tm2, tm3 et arrêtées à des instants td1, td2, td3, ces instants de début et d'arrêt étant déterminés par un dispositif de commande, à partir d'informations sur la position angulaire du rotor du moteur et de consignes de commande. Lors de ces séquences de magnétisation, les deux interrupteurs d'un demi-pont sont passants ("on") et le courant iₜ₁, iₜ₂, iₜ₃ circulant alors dans ces interrupteurs correspond à la partie croissante du courant iₚ₁, iₚ₂, iₚ₃ injecté dans la phase concernée P1, P2, P3.

Le courant d'alimentation redressé délivré par l'étage de filtrage est égal à la différence entre d'une part, la somme des courants appelés dans les interrupteurs des demi-ponts lors des séquences de magnétisation et d'autre part, la somme des courants renvoyés via des diodes de roue libre lors des séquences de démagnétisation. En termes énergétiques, l'énergie transférée dans une phase au cours d'une séquence de magnétisation provient pour une part, de la source de tension redressée, et pour une autre part, de la phase en cours de démagnétisation. Toute variation d'énergie provenant de la source ou transférée vers celle-ci se traduit par une variation du courant redressé délivré par cette source. Le procédé d'alimentation selon l'invention tend donc en quelque sorte à réguler les transferts d'énergie entre la source et le convertisseur en fonction du courant d'alimentation effectivement délivré.

Ce courant d'alimentation iₐ est mesuré et comparé à une onde de courant de référence, par exemple une onde de courant homothétique de l'onde de tension redressée double alternance.

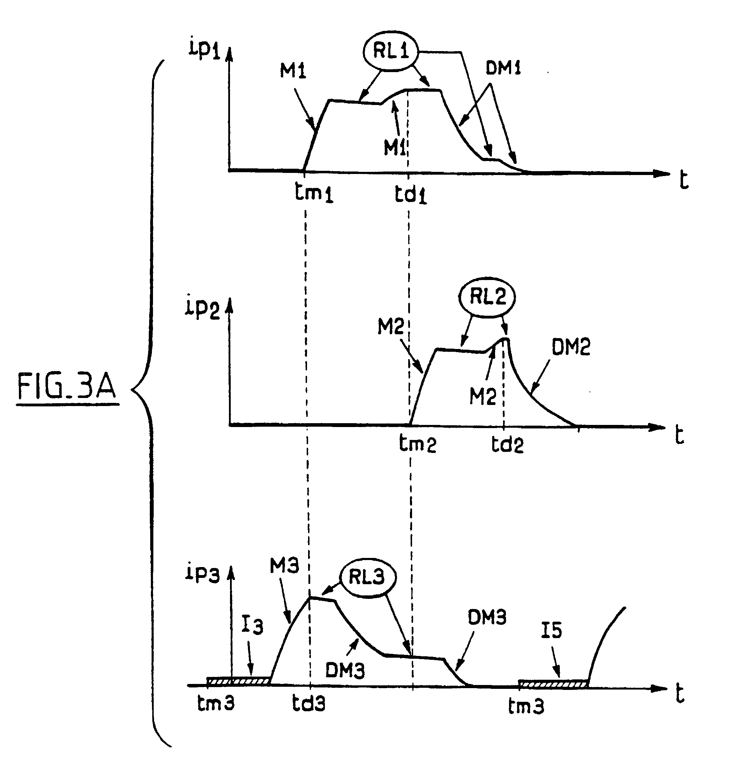

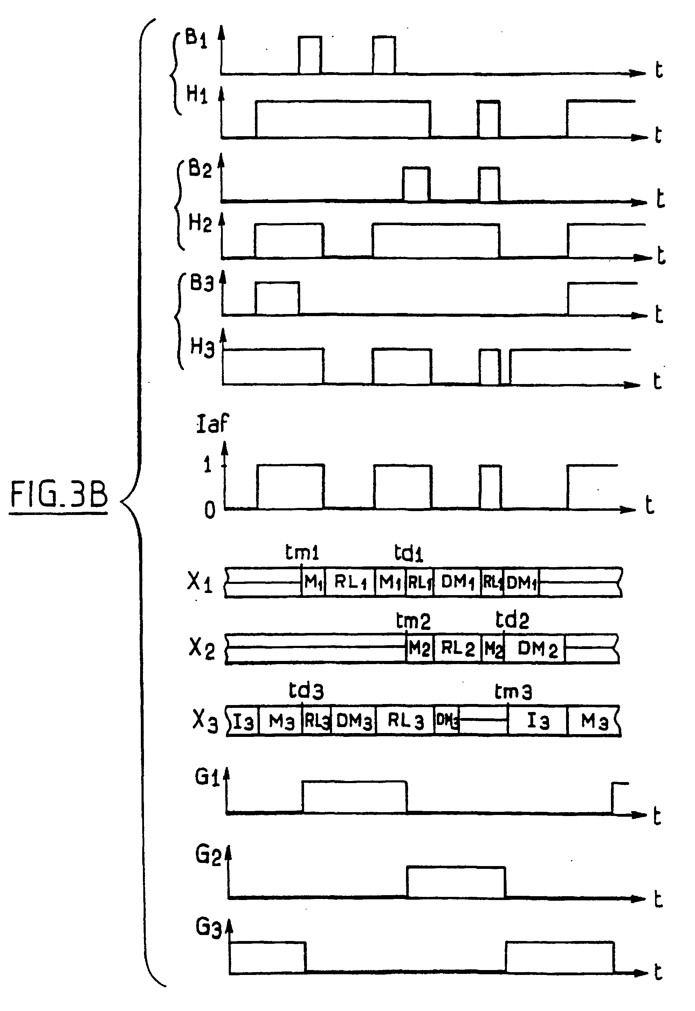

On va considérer les grandeurs et variables suivantes, en référence aux figures 3A et 3B:
- iₚ₁, iₚ₂, iₚ₃: courants dans les phases du moteur,
- B1, B2, B3: signaux de commande des interrupteurs bas des demi-ponts asymétriques,
- H1, H2, H3: signaux de commande des interrupteurs hauts des demi-ponts asymétriques,
- Iaf: variable logique indicative du niveau du courant d'alimentation; cette variable est calculée à partir du traitement de la mesure du courant d'alimentation:
   Iaf=1 lorsque le courant d'alimentation est inférieur à une valeur de référence,
   Iaf=0 lorsque le courant d'alimentation est supérieur ou égal à cette valeur de référence;
- X1, X2, X3: fonctions d'état énergétique de chaque phase du moteur; et
- G1, G2, G3: variables logiques correspondant aux fenêtres temporelles de magnétisation.

Dans une forme préférée de mise en oeuvre du procédé d'alimentation selon l'invention, les signaux de commande des interrupteurs bas et hauts sont régis par les expressions logiques suivantes:
Bi=Iaf.Gi
Hi=Iaf + Gi
avec i=1, 2, 3

Mais d'autres expressions logiques peuvent être utilisées pour déterminer les signaux de commande du circuit d'alimentation. Ainsi, on peut également mettre en oeuvre les expressions logiques suivantes:
Bi=Gi
Hi=Iaf
avec i=1; 2, 3

On va tout d'abord considérer la phase du moteur indicée 1. A un instant tₘ₁ déterminé par le dispositif de commande 4, une séquence de magnétisation M1 de la phase 1 est entreprise et se poursuit tant que la variable logique Iaf est au niveau logique 1 (courant "faible"). Lorsque la variable Iaf bascule sur le niveau logique 0 (courant "élevé"), la séquence de magnétisation est interrompue par blocage de l'interrupteur bas T1b et est suivie d'une séquence de roue libre RL1 au cours de laquelle l'interrupteur haut T1h est maintenu passant et la diode D1h devient conductrice. Au cours d'une séquence de roue libre qui est initiée en réponse à une détection d'un "excès" de courant, le courant circulant dans la phase concernée n'est plus appelé au niveau de l'alimentation et le courant d'alimentation en est donc diminué d'autant, ce qui contribue à réduire l'excès de courant précédemment détecté. Dès que la variable logique de courant Iaf rebascule au niveau logique 1 (courant faible), on retrouve une séquence de magnétisation M1 poursuivie jusqu'à ce qu'on atteigne un instant t_{d1} de démagnétisation déterminé par le dispositif de commande 4. Du fait que la variable logique de courant Iaf est encore au niveau logique 1, c'est de nouveau une séquence de roue libre RL1 qui est exécutée, et non une séquence de démagnétisation, ceci afin de ne pas aggraver le "déficit" de courant d'alimentation en renvoyant vers la source le courant de démagnétisation. Dès que la variable logique de courant Iaf rebascule au niveau O, la séquence de démagnétisation DM1 attendue est entreprise. Une transition de la variable logique de courant Iaf du niveau 0 au niveau 1 provoque la passage à une nouvelle séquence de roue libre RL1 qui est suivie, dès le retour de la variable logique Iaf au niveau 0, d'une ultime séquence de démagnétisation jusqu'à annulation du courant dans la phase P1 concernée. Ainsi, sur une période électrique, les diverses séquences de roue libre ont toutes pour fonction de réduire les perturbations du courant d'alimentation redressé, soit en neutralisant l'appel de courant dans une phase au cours d'une séquence de magnétisation (courant élevé), soit en neutralisant le renvoi de courant provenant d'une phase (courant faible).

S'agissant de l'alimentation de la phase P2 du moteur, une séquence de magnétisation M2 est entreprise à un instant tₘ₂ déterminé par le dispositif de commande 4 en fonction d'informations de position angulaire délivrées par le capteur 9. Cette séquence de magnétisation M2 est interrompue lorsque la variable logique de courant Iaf bascule du niveau logique 1 au niveau logique 0 (courant élevé) . Une séquence de roue libre RL2 est alors entreprise jusqu'à ce que la variable logique de courant Iaf bascule de nouveau au niveau logique 1 (courant faible) et conduise à une nouvelle séquence de magnétisation jusqu'à un instant t_{d2} de commande de démagnétisation. Une séquence de démagnétisation DM2 est alors entreprise jusqu'à annulation du courant iₚ₂ dans la phase P2 concernée.

On va maintenant étudier le cas de l'alimentation de la troisième phase P3 dans le cas particulier illustré par l'évolution temporelle de la variable logique de courant Iaf. A un instant tₘ₃ de début de magnétisation déterminé par le dispositif de commande 4, la variable logique de courant Iaf est au niveau logique 0 (courant élevé), ce qui a pour conséquence de provoquer une séquence de roue libre (13) à courant nul retardant la séquence de magnétisation jusqu'à ce que la variable logique de courant Iaf bascule au niveau logique 1 (courant faible). Ceci signifie que tant que le courant d'alimentation est considéré comme trop élevé, on ne peut entreprendre une séquence de magnétisation qui aurait inévitablement pour conséquence, en provoquant un nouvel appel de courant, d'aggraver l'excès de courant appelé. Après cette séquence d'inhibition I3, une séquence de magnétisation M3 est entreprise jusqu'à ce qu'on atteigne un instant de démagnétisation td3 déterminé par le dispositif de commande 4. Comme le courant est encore considéré comme trop faible (Iaf=1), la séquence de démagnétisation normalement attendue est neutralisée et remplacée par une séquence de roue libre (RL3) jusqu'à ce que la variable logique de courant Iaf bascule au niveau logique 0 (courant élevé). On entreprend alors une séquence de démagnétisation DM3 jusqu'à ce que la variable logique de courant Iaf rebascule au niveau logique 1 (courant faible) avec pour conséquence de provoquer une nouvelle séquence de roue libre RL3. Un nouveau basculement de la variable logique de courant Iaf conduit enfin à une ultime séquence de démagnétisation DM3 jusqu'à annulation du courant dans la phase P3.

Il faut noter que la description qui vient d'être faite ne concerne qu'un exemple de fonctionnement très particulier et que les trois phases peuvent connaître des états énergétiques quelconques indépendamment de leurs rangs respectifs. Par ailleurs, les formes d'onde résultantes des courants de phase peuvent être très différentes de celles décrites et correspondre à d'autres combinaisons de séquences. De plus, la stratégie de commande peut être modifiée pour inclure par exemple des états de magnétisation simultanée de plusieurs phases.

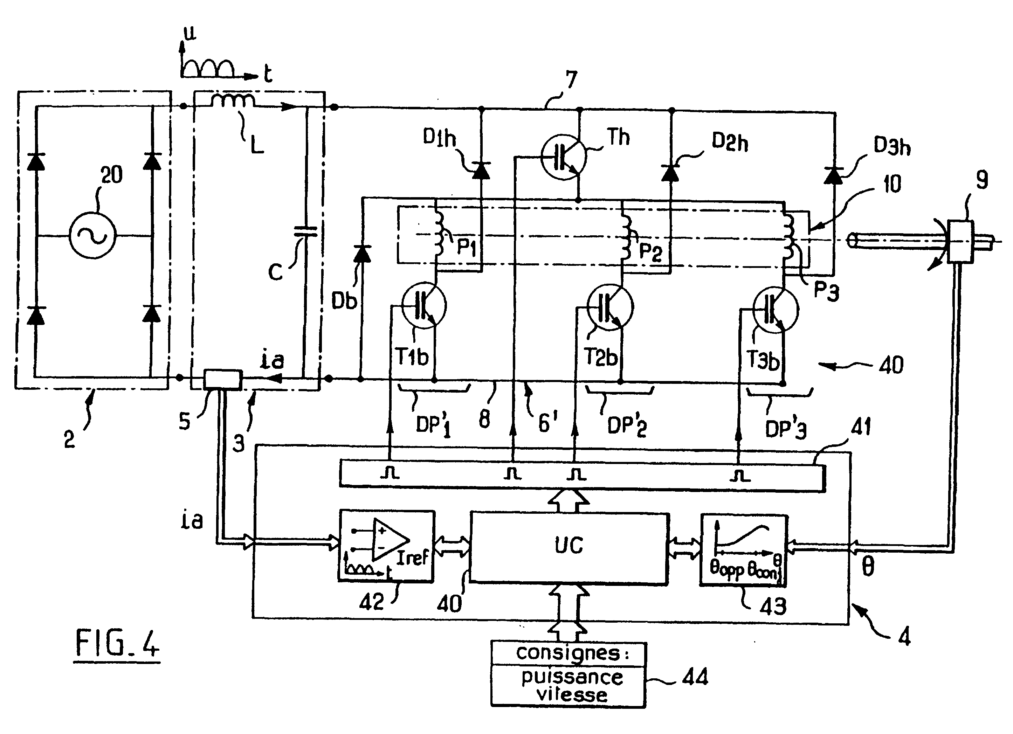

La présente invention peut aussi être appliquée à une seconde structure de circuit d'alimentation ne comportant qu'un seul interrupteur haut commun à l'ensemble des phases du moteur, comme l'illustre la figure 4 dans laquelle les éléments communs à la figure 1 sont référencés de manière identique.

Le circuit d'alimentation 40 comprend un étage convertisseur 6' constitué de trois bras de commutation DP'1, DP'2, DP'3 comprenant chacun un interrupteur bas T1b, T2b, T3b disposé entre une première borne d'une phase P1, P2, P3 du moteur 10 et la ligne basse d'alimentation 8, et une diode de roue libre D1h, D2h, D3h disposée entre la seconde borne de la phase concernée P1, P2, P3 et la ligne haute d'alimentation 7. Un interrupteur haut commun Th est disposé entre la ligne haute d'alimentation 7 et le pont commun de connexion des trois autres bornes des phases P1, P2, P3. Les séquences de magnétisation de chaque phase correspondent à une commande concomitante de l'interrupteur haut Th et de l'interrupteur bas T1b, T2b, T3b concerné. Les séquences de démagnétisation de chaque phase correspondent à un blocage de l'interrupteur bas T1b, T2b, T3b correspondant et/ou de l'interrupteur haut commun Th. Des séquences de roue libre de chaque phase peuvent être entreprises soit en commandant en mode passant au moins l'un des interrupteurs bas T1b, T2b, T3b alors que l'interrupteur haut Th est bloqué, soit en commandant en mode passant l'interrupteur haut Th alors les interrupteurs bas T1b, T2b, T3b sont bloqués. En se référant aux signaux logiques de commande G1, G2, G3 et à la variable logique de courant Iaf représentée en figure 3B, les signaux de commande B1, B2, B3 des interrupteurs bas T1b, T2b, T3b et le signal de commande H de l'interrupteur haut Th peuvent être exprimés de la façon suivantes:
Bi = Gi avec i=1, 2, 3
H = Iaf

On peut également prévoir un autre mode de commande comprenant, en réponse à la détection d'une perturbation du courant d'alimentation, des actions de magnétisation/roue libre et/ou des actions de démagnétisation/roue libre avec des rapports cycliques variables en fonction d'un niveau de perturbation du courant d'alimentation. Ces rapports cycliques variables peuvent par exemple être modulés proportionnellement au niveau de perturbation détecté. Il ne s'agit alors plus d'une détection de type "tout ou rien" pour les perturbations du courant d'alimentation, mais d'une mesure du niveau de perturbations à partir de laquelle les rapports cycliques des actions de magnétisation/roue libre et de démagnétisation/roue libre sont déterminés.

Bien sûr, l'invention n'est pas limitée aux exemples qui viennent d'être décrits et de nombreux aménagements peuvent être apportés à ces exemples sans sortir du cadre de l'invention. Ainsi, le nombre de phases et de paires de pôles du moteur à réluctance variable alimenté avec ce procédé peut être quelconque. Par ailleurs, le procédé selon l'invention peut accepter toute loi usuelle de réglage des angles de début des séquences de magnétisation et de démagnétisation. Le choix des interrupteurs de puissance ne saurait se limiter aux transistors IGBT proposés dans la description mais peut inclure toute autre technologie de transistor. De plus, les logiques de commande des interrupteurs hauts et bas peuvent bien sûr être permutées.

## Revendications

1. Procédé pour alimenter un moteur électrique polyphasé à réluctance variable à commutation électronique (10) à partir d'une source de tension redressée (2), comprenant pour chaque phase (P1-3) de ce moteur (10):
des séquences de magnétisation (M1-3) pendant lesquelles la tension redressée est appliquée sur ladite phase (P1-3),
des séquences de démagnétisation (DM1-3) pendant lesquelles l'inverse de ladite tension redressée est appliqué sur ladite phase (P1-3),
**caractérisé en ce qu'**il comprend en outre:
une détection de perturbations affectant le courant (ia) délivré par la source de tension redressée (2),
et en réponse à une telle détection, des séquences de roue libre (RL1-3) pendant lesquelles l'énergie magnétique présentement stockée dans au moins l'une desdites phases (P1-3) est sensiblement maintenue dans celle(s)-ci.

2. Procédé selon la revendication 1, **caractérisé en ce que** l'on détecte des perturbations affectant le courant d'alimentation redressé (ia) en mesurant ce courant et en le comparant à une onde de courant de référence.

3. Procédé selon l'une des revendications 1 ou 2, **caractérisé en ce que** la détection, pendant une séquence de magnétisation (M1-3) d'une phase (P1-3), d'un courant d'alimentation supérieur à une valeur de référence de courant à l'instant de détection, conduit à une interruption de cette séquence de magnétisation (M1-3) et à une séquence de roue libre (RL1-3) sur cette phase (P1-3).

4. Procédé selon l'une des revendications précédentes, **caractérisé en ce que** la détection, pendant une séquence de démagnétisation (DM1-3) d'une phase (P1-3), d'un courant d'alimentation inférieur à une valeur de référence de courant à l'instant de détection, conduit à une interruption de cette séquence de démagnétisation (DM1-3) et à une séquence de roue libre (RL1-3) sur cette phase (P1-3).

5. Procédé selon l'une des revendications précédentes, **caractérisé en ce que** la détection, lors de l'initiation d'une séquence de magnétisation (M3) d'une phase (P3), d'un courant d'alimentation supérieur à une valeur de référence de courant à l'instant de détection, provoque une séquence de roue libre (I3) inhibant cette séquence de magnétisation (M3) jusqu'à ce que la perturbation sur le courant d'alimentation soit compensée.

6. Procédé selon l'une des revendications précédentes, **caractérisé en ce que** les moyens de commande sont en outre adaptés à commander des états de magnétisation simultanée de plusieurs phases du moteur.

7. Procédé selon l'une des revendications 1 ou 2, **caractérisé en ce que** les moyens de commande sont en outre adaptés à commander sur chaque phase, en réponse à la détection d'une perturbation du courant d'alimentation, des actions de magnétisation/roue libre et/ou des actions de démagnétisation/roue libre avec des rapports cycliques variables en fonction d'un niveau de perturbation du courant d'alimentation.

8. Procédé selon la revendication 7, **caractérisé en ce que** les rapports cycliques des actions de magnétisation/roue libre et des actions de démagnétisation/roue libre sont modulés proportionnellement au niveau de perturbation détecté.

9. Circuit pour alimenter un moteur électrique polyphasé à réluctance variable à commutation électronique (10), comprenant des moyens (2) pour redresser une tension alternative délivrée par une source (20), des moyens (T1h, T1b, T2h, T2b, T3h, T3b; Th) pour magnétiser successivement chaque phase (P1-3) par application successive de cette tension redressée sur ces phases (Pl-3), des moyens (D1h, D1b, D2h, D2b, D3h, D3b; Db) pour démagnétiser successivement chaque phase (P1-3) par application successive de l'inverse de cette tension redressée sur ces phases (P1-3), et des moyens (4) pour commander lesdits moyens de magnétisation et de démagnétisation, ce circuit mettant en oeuvre le procédé selon l'une des revendications précédentes, **caractérisé en ce qu'**il comprend en outre des moyens (5) pour mesurer le courant d'alimentation (ia) délivré par les moyens redresseurs (2), et **en ce que** les moyens de commande (4) sont adaptés à détecter toute perturbation du courant d'alimentation redressé (ia) et pour commander les moyens de magnétisation et de démagnétisation de façon à corriger les perturbations.

10. Circuit selon la revendication 9, **caractérisé en ce que** les moyens de commande (4) sont adaptés à détecter toute perturbation du courant d'alimentation (ia) par rapport à une onde de courant de référence (Iref), et **en ce que** lorsque les moyens de magnétisation (T1h, T1b, T2h, T2b, T3h, T3b; Th) sont commandés pour placer en roue libre (RL1-3) la phase (P1-3) en cours de magnétisation lorsqu'un courant d'alimentation supérieur à une valeur de référence est détecté.

11. Circuit selon la revendication 10, **caractérisé en ce que** les moyens de magnétisation et de démagnétisation sont commandés pour placer en roue libre (RL1-3) la phase (P1-3) en cours de démagnétisation lorsqu'un courant d'alimentation inférieur à une valeur de référence est détecté.

12. Circuit selon l'une des revendications 9 à 11, comprenant, au titre des moyens de magnétisation et des moyens de démagnétisation, des demi-ponts asymétriques (DP1-3) pour alimenter chaque phase (P1-3) du moteur (10), chaque demi-pont asymétrique (DP1-3) comprenant des moyens interrupteurs hauts (T1h, T2h, T3h) et des moyens interrupteurs bas (T1b, T2b, T3b) disposés de part et d'autre de chaque phase (P1-3) et des diodes de démagnétisation (D1h, D2h, D3h; D1b, D2b, D3b) pour relier les bornes de chaque phase (P1-3) aux bornes des moyens redresseurs (2), **caractérisé en ce que** les moyens de commande (4) sont adaptés à bloquer les interrupteurs bas (T1b, T2b, T3b) en réponse à une détection d'un courant d'alimentation (ia) supérieur à une valeur de référence.

13. Circuit selon l'une des revendications 9 à 11, comprenant, au titre des moyens de magnétisation et des moyens de démagnétisation, des bras de commutation (DP'1-3) pour alimenter chaque phase (P1-3) du moteur (10), des moyens interrupteurs hauts (Th) disposés entre une ligne haute d'alimentation (7) et un point commun de connexion des secondes bornes respectives de chaque phase (P1, P2, P3), et une diode de roue libre commune (Db) ayant sa cathode reliée audit point commun et son anode reliée à une ligne basse d'alimentation (8), chaque bras de commutation (DP'1-3) comprenant des moyens interrupteurs bas (T1b, T2b, T3b) disposés entre la ligne basse d'alimentation (8) et une première borne d'une phase (P1-3) et une diode de roue libre (D1h, D2h, D3h) ayant son anode reliée à cette première borne et sa cathode reliée à la ligne haute d'alimentation (7), **caractérisé en ce que** les moyens de commande (4) sont adaptés à bloquer les interrupteurs bas (T1b, T2b, T3b) en réponse à une détection d'un courant d'alimentation (ia) supérieur à une valeur de référence.

14. Circuit selon l'une des revendications 12 ou 13, **caractérisé en ce que** les moyens de commande (4) sont en outre adaptés à commander en mode passant les moyens interrupteurs hauts (T1h, T2h, T3h; Th) en réponse à une détection d'un courant d'alimentation (ia) inférieur à une valeur de référence.

15. Circuit selon l'une des revendications 12 à 14, **caractérisé en ce qu'**il comprend en outre des moyens de filtrage (3) interposés entre l'alimentation et l'étage convertisseur (6, 6').

## Patentansprüche

1. Verfahren zur Versorgung eines elektronisch kommutierten mehrphasigen Elektromotors mit variabler Reluktanz von einer Quelle gleichgerichteter Spannung (2) mit für jede Phase (P1 - 3) diese Motors (10):
- Magnetisierungsschritten (M1 - 3), während derer die gleichgerichtete Spannung an die Phase (P1 - 3) angelegt wird,
- Entmagnetisierungsschritten (DM1 - 3), während derer die Umkehrung der gleichgerichteten Spannung an die Phase (P1 - 3) angelegt wird,
**dadurch gekennzeichnet, daß** es außerdem umfaßt:
- eine Erfassung von Störungen, welche den von der Quelle gleichgerichteter Spannung (2) gelieferten Strom (ia) beeinflussen,
- und entsprechend einer solchen Erfassung Freilaufschritte (RL1 - 3), während derer die in mindestens einer dieser Phasen (P1 - 3) gegenwärtig gespeicherte magnetische Energie im wesentlichen in dieser (diesen) gehalten wird.

2. Verfahren nach Anspruch 1, **dadurch gekennzeichnet, daß** man Störungen erfaßt, welche den gleichgerichteten Versorgungsstrom (ia) beeinflussen, indem man diesen Strom mißt und ihn mit der Wellenform eines Referenzstroms vergleicht.

3. Verfahren nach einem der Ansprüche 1 oder 2, **dadurch gekennzeichnet, daß** die während eines Magnetisierungsschritts (M1 -3) einer Phase (P1 - 3) bewirkte Erfassung eines Versorgungsstroms, der zum Zeitpunkt der Erfassung größer als ein Referenzstromwert ist, zu einer Unterbrechung dieses Magnetisierungsschritts (M1 - 3) und zu einem Freilaufschritt (RL1 - 3) in dieser Phase (P1 - 3) führt.

4. Verfahren nach einem der vorangehenden Ansprüche, **dadurch gekennzeichnet, daß** die während eines Entmagnetisierungsschrittes (DM1 - 3) einer Phase (P1 - 3) bewirkte Erfassung eines Versorgungsstroms, der zum Zeitpunkt der Erfassung kleiner als ein Strombezugswert ist, zu einer Unterbrechung dieses Entmagnetisierungsschritts (DM1 - 3) und zu einem Freilaufschritt (RL1 - 3) in dieser Phase (P1 - 3) führt.

5. Verfahren nach einem der vorangehenden Ansprüche, **dadurch gekennzeichnet, daß** die bei der Einleitung eines Magnetisierungsschritts (M3) einer Phase (P3) bewirkte Erfassung eines Versorgungsstroms, der zum Zeitpunkt der Erfassung größer ist als ein Referenzstromwert, einen Freilaufschritt (I3) bewirkt, der diesen Magnetisierungsschritt (M3) hemmt, bis die Störung am Versorgungsstrom kompensiert ist.

6. Verfahren nach einem der vorangehenden Ansprüche, **dadurch gekennzeichnet, daß** die Steuervorrichtung außerdem dafür eingerichtet ist, die gleichzeitigen Magnetisierungszustände mehrerer Phasen des Motors zu steuern.

7. Verfahren nach einem der Ansprüche 1 oder 2, **dadurch gekennzeichnet, daß** die Steuervorrichtung außerdem dafür eingerichtet ist, in jeder Phase entsprechend der Erfassung einer Störung des Versorgungsstroms Maßnahmen der Magnetisierung/Freilauf und/oder Maßnahmen der Entmagnetisierung/Freilauf mit variablen zyklischen Verhältnissen in Abhängigkeit von einem Störungsniveau des Versorgungsstroms zu steuern.

8. Verfahren nach Anspruch 7, **dadurch gekennzeichnet, daß** die zyklischen Verhältnisse der Maßnahmen von Magnetisierung/Freilauf und der Maßnahmen von Entmagnetisierung/Freilauf proportional zum Niveau der erfaßten Störung moduliert werden.

9. Versorgungsschaltkreis für einen elektronisch kommutierten mehrphasigen Elektromotor mit variabler Reluktanz (10) mit einer Vorrichtung (2) zum Gleichrichten einer von einer Quelle (20) gelieferten Wechselspannung, Vorrichtungen (T1h, T1b, T2h, T2b, T3h, T3b; Th) zum aufeinanderfolgenden Magnetisieren jeder Phase (P1 - 3) durch aufeinanderfolgendes Anlegen dieser gleichgerichteten Spannung an diese Phasen (P1 - 3), Vorrichtungen (D1h, D1b, D2h, D2b, D3h, D3b; Db) zum aufeinanderfolgenden Entmagnetisieren jeder Phase (P1 - 3) durch aufeinanderfolgendes Anlegen der Umkehrung dieser gleichgerichteten Spannung an diese Phasen (P1 - 3) und eine Vorrichtung (4) zum Steuern der Magnetisierungs- und Entmagnetisierungsvorrichtungen dieses Schaltkreises unter Benutzung des Verfahrens nach einem der vorangehenden Ansprüche, **dadurch gekennzeichnet, daß** er außerdem eine Vorrichtung (5) zum Messen des von der Gleichrichtervorrichtung (2) abgegebenen Versorgungsstroms (ia) umfaßt und daß die Steuervorrichtung (4) dafür eingerichtet ist, ihre Störung des gleichgerichteten Versorgungsstroms (ia) zu erfassen und die Magnetisierungs- und Entmagnetisierungsvorrichtungen so zu steuern, daß die Störungen korrigiert werden.

10. Schaltkreis nach Anspruch 9, **dadurch gekennzeichnet, daß** die Steuervorrichtung (4) dafür eingerichtet ist, jede Störung des Versorgungsstroms (ia) bezüglich der Wellenform eines Referenzstroms (Iref) zu erfassen und daß die Magnetisierungsvorrichtungen (T1h, T1b, T2h, T2b, T3h, T3b; Th) so gesteuert sind, daß die Phase (P1 - 3) im Verlauf der Magnetisierung in Freilauf (RL1 - 3) gebracht wird, wenn ein Versorgungsstrom erfaßt wird, der größer als ein Referenzwert ist.

11. Schaltkreis nach Anspruch 10, **dadurch gekennzeichnet, daß** die Magnetisierungs- und Entmagnetisierungsvorrichtungen so gesteuert sind, daß die Phase (P1 - 3) während der Entmagnetisierung in Freilauf (RL1 - 3) gebracht wird, wenn ein Versorgungsstrom erfaßt wird, der kleiner als ein Referenzwert ist.

12. Schaltkreis nach einem der Ansprüche 9 bis 11, der als Magnetisierungs- und Entmagnetisierungsvorrichtungen asymmetrische Halbbrücken (D1 - 3) zur Versorgung jeder Phase (P1 - 3) des Motors (10) aufweist, wobei jede asymmetrische Halbbrücke (DP1 - 3) obere Schalter (T1h, T2h, T3h) und untere Schalter (T1b, T2b, T3b) aufweist, die auf der einen und anderen Seite jeder Phase (P1 - 3) angeordnet sind, und Entmagnetisierungsdioden (D1h, D2h, D2h; D1b, D2b, D3b) aufweist, um die Klemmen jeder Phase (P1 - 3) mit den Klemmen der Gleichrichtervorrichtung (2) zu verbinden, **dadurch gekennzeichnet, daß** die Steuervorrichtung (4) dafür eingerichtet ist, die unteren Schalter (T1b, T2b, T3b) zu sperren, wenn ein Versorgungsstrom (ia) erfaßt wird, der größer als ein Referenzwert ist.

13. Schaltkreis nach einem der Ansprüche 9 bis 11, der als Magnetisierungs- und Entmagnetisierungsvorrichtungen Kommutierungszweige (DP'1 - 3) zur Versorgung jeder Phase (P1 - 3) des Motors (10), obere Schalter (Th), die zwischen einer oberen Versorgungsleitung (7) und einem gemeinsamen Punkt zur Verbindung der jeweiligen zweiten Klemme jeder Phase (P1, P2, P3) angeordnet sind, und eine gemeinsame Freilaufdiode (Db) aufweist, deren Kathode mit dem gemeinsamen Punkt und deren Anode mit einer unteren Versorgungsleitung (8) verbunden ist, wobei jeder Kommutierungszweig (DP'1 - 3) untere Schalter (T1b, T2b, T3b) aufweist, die zwischen der unteren Versorgungsleitung (8) und einer ersten Klemme einer Phase (P1 - 3) angeordnet sind und eine Freilaufdiode (D1h, D2h, D3h) aufweist, deren Anode mit dieser ersten Klemme und deren Kathode mit der oberen Versorgungsleitung (7) verbunden ist, **dadurch gekennzeichnet, daß** die Steuervorrichtung (4) dafür eingerichtet ist, die unteren Schalter (T1b, T2b, T3b) zu sperren, wenn ein Versorgungsstrom (ia) erfaßt wird, der größer als ein Bezugswert ist.

14. Schaltkreis nach einem der Ansprüche 12 oder 13, **dadurch gekennzeichnet, daß** die Steuervorrichtung (4) auch dafür eingerichtet ist, die oberen Schalter (T1h, T2h, T3h; Th) in den leitenden Modus zu steuern, wenn ein Versorgungsstrom (ia) erfaßt wird, der kleiner als ein Referenzwert ist.

15. Schaltkreis nach einem der Ansprüche 12 bis 14, **dadurch gekennzeichnet, daß** er außerdem eine Filtervorrichtung (3) aufweist, die zwischen die Versorgung und die Umformerstufe (6, 6') eingeschaltet ist.

## Claims

1. Method for feeding an electronically switched variable reluctance polyphase electric motor (10) from a DC voltage source (2), comprising for each phase (P1-3) of this motor :
magnetising sequences (M1-3) during which the DC voltage is applied to the said phase (P1-3),
demagnetising sequences (DM1-3) during which the inverse of the DC voltage is applied to the said phase (P1-3),
**characterised in that** it also includes :
detection of fluctuations affecting the current (ia) delivered by the DC voltage source (2),
and, in response to any such detection, freewheeling sequences (RL1-3) during which the magnetic energy stored at that time in at least one of the said phases (P1-3) is substantially maintained in the latter.

2. Method according to claim 1, **characterised in that** the fluctuations affecting the current (ia) delivered by the DC voltage source are detected by measuring this current and comparing it with a reference current wave.

3. Method according to claim 1 or 2, **characterised in that** the detection, during a magnetising sequence (M1-3) of a phase (P1-3), of a feed current greater than that of a reference current value at the time of detection, leads to an interruption of this magnetising sequence (M1-3) and a freewheeling sequence (RL1-3) on this phase (P1-3).

4. Method according to anyone of the preceding claims,
**characterised in that** the detection, during a demagnetising sequence (DM1-3) of a phase (P1-3), of a feed current lower than that of a reference current value at the time of detection, leads to a break of this demagnetising sequence (DM1-3) and a freewheeling sequence (RL1-3) on this phase (P1-3).

5. Method according to anyone of the preceding claims, **characterised in that** the detection, during initiation of a magnetising sequence (M3) of a phase (P3), of a feed current greater than a reference current value at the time of detection, triggers a freewheeling sequence (I3) inhibiting this magnetising sequence (M3) until the fluctuation in the feed current is compensated.

6. Method according to anyone of the preceding claims, **characterised in that** the control means are also adapted to control the simultaneous magnetisation states of more than one phase of the motor.

7. Method according to claim 1 or 2, **characterised in that** the control means are also adapted to control over each phase, in response to the detection of a fluctuation in the feed current, magnetising/freewheeling actions and/or demagnetising/freewheeling actions with variable cyclical ratios, according to a degree of fluctuation in the feed current.

8. Method according to claim 7, **characterised in that** the cyclical ratios of the magnetising/freewheeling actions and/or the demagnetising/freewheeling actions are modulated in proportion to the degree of detected fluctuation.

9. Circuit for feeding an electronically switched variable reluctance polyphase electric motor (10), comprising means (2) for rectifying an AC voltage delivered by a source (20), means (T1h, T1b, T2h, T2b, T3h, T3b ; Th) for magnetising each phase (P1-3) in succession by successive application of this DC voltage to these phases (P1-3), means (D1h, D1b, D2h, D2b, D3h, D3b ; Db) for demagnetising each phase (P1-3) in succession by successive application of the inverse of this DC voltage to these phases (P1-3), and means (4) for controlling the said magnetising and demagnetising means, this circuit implementing the method according to anyone of the preceding claims, **characterised in that** it also includes means (5) for measuring the feed current (ia) delivered by the rectifying means (2), and **in that** the control means (4) are adapted to detect any fluctuation in the DC feed current (ia) and to control the magnetising and demagnetising means so as to correct the fluctuations.

10. Circuit according to claim 9, **characterised in that** the control means (4) are adapted to detect any fluctuation in the feed current (ia) compared with a reference current wave (Iref), and **in that** the magnetising means (T1h, T1b, T2h, T2b, T3h, T3b ; Th) are controlled to place the phase (P1-3) into freewheel (RL1-3) when a feed current greater than a reference value is detected during magnetising.

11. Circuit according to claim 10, **characterised in that** the magnetising and demagnetising means are controlled to place the phase (P1-3) into freewheel (RL1-3) when a feed current lower than a reference value is detected during demagnetising.

12. Circuit according to one of the claims 9 to 11, including, as magnetising and demagnetising means, asymmetrical halfbridges (DP1-3) to feed each phase (P1-3) of the motor (10), each half-bridge (DP1-3) including HT breakers (T1h, T2h, T3h) and LT breakers (T1b, T2b, T3b) placed each side of each phase (P1-3) and demagnetising diodes (D1h, D2h, D3h ; D1b, D2b, D3b) to link the terminals of each phase (P1-3) to the terminals of the rectifying means (2), **characterised in that** the control means (4) are adapted to block the LT breakers (T1b, T2b, T3b) in response to a detection of a feed current (ia) greater than a reference value.

13. Circuit according to one of the claims 9 to 11, comprising, as magnetising and demagnetising means, switching arms (DP'1-3) to feed each phase (P1-3) of the motor (10), HT breaker means (Th)placed between a HT feed line (7) and a common point for connecting second terminals of each respective phase (P1, P2, P3), and a common freewheeling diode (Db) with its cathode connected to the said common point and its anode connected to a LT feed line (8), each switching arm (DP'1-3) including LT breaker means (T1b, T2b, T3b) placed between the LT feed line (8) and a first terminal of a phase (P1-3) and a freewheeling diode (D1h, D2h, D3h), with its anode connected to this first terminal and its cathode connected to the HT feed line (7), **characterised in that** the control means (4) are adapted to block the LT breakers (T1b, T2b, T3b) in response to a detection of a feed current (ia) greater than a reference value.

14. Circuit according to claim 12 or 13, **characterised in that** the control means (4) are also adapted to control temporarily the HT breaker means (T1h, T2h, T3h ; Th) in response to a detection of a feed current (ia) lower than a reference value.

15. Circuit according to one of the claims 12 to 14, **characterised in that** it also included filtering means (3) interposed between the feed and the converter stage (6, 6').
